# EUROPÄISCHE PATENTSCHRIFT

(11) **EP 3 832 021 B1**
(45) Veröffentlichungstag und Bekanntmachung des Hinweises auf die Patenterteilung: **02.11.2022**
(21) Anmeldenummer: 20211018.5
(22) Anmeldetag: 01.12.2020
(51) Int. Cl.: E01C 23/088, E01C 23/12, B28D 7/02, B65G 69/18

(54) **BODENBEARBEITUNGSMASCHINE MIT STAUBABSAUGUNG MIT WAHLWEISER FILTERUNG DER ABGESAUGTEN STAUBBELASTETEN LUFT**
SOIL TREATMENT MACHINE WITH DUST EXTRACTION WITH OPTIONAL FILTERING OF THE SUCTION DUST-POLLED AIR
MACHINE DE TRAITEMENT DE SOLS AVEC EXTRACTION DE POUSSIÈRE AVEC FILTRAGE OPTIONNEL DE L'AIR SALE ASPIRÉ

(30) Priorität: 03.12.2019 DE 102019132889
(43) Veröffentlichungstag der Anmeldung: 09.06.2021
(73) Patentinhaber: Wirtgen GmbH, 53578 Windhagen (DE)
(72) Erfinder: Berning, Christian, 53909 Zülpich (DE); Drumm, Stephan, 53560 Vettelschoß (DE)
(74) Vertreter: Ruttensperger Lachnit Trossin Gomoll

(56) Entgegenhaltungen:
- DE-B3-102004 007 716

## Beschreibung

Die vorliegende Erfindung betrifft eine selbstfahrende Bodenbearbeitungsmaschine, wie etwa eine Straßenfräse, einen Recycler oder einen Surface-Miner, wobei die Bodenbearbeitungsmaschine umfasst:
- einen von einer Mehrzahl von Ketten- oder/und Radlaufwerken höhenverstellbar getragenen Maschinenrahmen,
- eine Arbeitsvorrichtung zur Material abtragenden Bearbeitung eines Bereichs eines Bodens, und
- eine Absaugeinrichtung, welche dazu ausgebildet ist, staubbelastete Luft an wenigstens einem Absaugort aus wenigstens einem Maschinenbereich abzusaugen und abgesaugte Luft an einem vom Absaugort verschiedenen Abblasort auszublasen,
wobei die Absaugeinrichtung eine längs eines Betriebsströmungswegs vom wenigstens einen Absaugort zum Abblasort angeordnete Filtervorrichtung aufweist, wobei die Filtervorrichtung umfasst:
- ein Filtergehäuse, und
- einen im Filtergehäuse aufgenommenen Filterkörper, wobei der Filterkörper dazu ausgebildet ist, Staubpartikel aus der die Filtervorrichtung durchströmenden Luft zu entfernen.

Eine solche Bodenbearbeitungsmaschine in Ausführungsform einer Boden-, insbesondere Straßenfräsmaschine ist beispielsweise aus der DE 10 2004 007 716 B3 bekannt.

Das von der Arbeitsvorrichtung abgetragene Bodenmaterial wird - im Stand der Technik ebenso wie bevorzugt auch in der vorliegenden Erfindung - ausgehend von einem Arbeitsvorrichtungsgehäuse, in welchem die Arbeitsvorrichtung zur Ausführung einer Abtragsbewegung beweglich aufgenommen ist, mittels eines Transportbandes zu einem Abgabeort gefördert. Das Arbeitsvorrichtungsgehäuse schirmt als Arbeitsschutzvorrichtung die Umgebung der Arbeitsvorrichtung vor der Arbeitsvorrichtung und dem durch sie abgetragenen Bodenmaterial ab. Am Abgabeort wird das geförderte abgetragene Bodenmaterial in der Regel abgeworfen, häufig auf ein die mobile, selbstfahrende Bodenbearbeitungsmaschine begleitendes Fahrzeug, welches das aufgenommene abgetragene Bodenmaterial entsorgt oder weiterverarbeitet.

Am Eingriffsort der abtragenden Arbeitsvorrichtung mit dem zu bearbeitenden Boden werden Bodenmaterialstücke unterschiedlich großer Körnung aus dem Boden herausgetrennt. Diese Bodenmaterialstücke bewegen sich mit hoher kinetischer Energie in dem Arbeitsvorrichtungsgehäuse und prallen auf die Wandung des Arbeitsvorrichtungsgehäuses, kollidieren untereinander oder/und mit Wirkflächen von Auswerfern an der Arbeitsvorrichtung sowie mit der Arbeitsvorrichtung selbst. Bei diesen Kollisionen entstehen, wie schon beim Abtrag des Bodenmaterials durch die Arbeitsvorrichtung, Stäube unterschiedlicher Körnung bis hin zum Feinstaub. Es sind diese Stäube, die die durch die Absaugeinrichtung abgesaugte Luft belasten. Die Stäube können in dem Arbeitsvorrichtungsgehäuse oder/und beim Transport des abgetragen Bodenmaterials in den das abgetragene Bodenmaterial umgebenden Luftraum übergehen. Dies gilt für den Stand der Technik ebenso wie für die vorliegende Erfindung.

Bereits die DE 102 23819 A1 lehrt, die durch die Bodenbearbeitung entstehende staubbelastete Luft an einem näher bei der Arbeitsvorrichtung gelegenen Absaugort abzusaugen und in einem weiter von der Arbeitsvorrichtung entfernt gelegenen Abblasort auf das Transportband abzublasen. Durch eine Berieselungseinrichtung, welche die Umgebung des Abblasorts mit Wasser berieselt oder/und durch eine elektrostatische Abscheidevorrichtung kann Staub in der am Abblasort abgeblasenen Luft aus der Luft entfernt werden.

Die DE 10 2004 007 716 B3 lehrt, zur Erhöhung der Standfestigkeit eines die staubbelastete Luft fördernden Fördergebläses eine Filtervorrichtung im Strömungsweg der staubbelasteten Luft vom Absaugort zum Abblasort stromaufwärts des Fördergebläses anzuordnen und so die Luft zu reinigen, bevor sie das Fördergebläse erreicht. Die bekannte Filtervorrichtung umfasst ein Filtergehäuse, in welchen eine Mehrzahl von sogenannten "Filterkartuschen" als Filterkörper aufgenommen ist, um eine möglichst große Filterfläche zu erzielen.

Da die Filterkörper auf ihrer Schmutzseite mit zunehmender Dauer des Filterbetriebs einen Filterkuchen bilden, welcher bei Überschreiten einer kritischen Größe die Filterwirkung des jeweiligen Filterkörpers beeinträchtigt, lehrt die DE 10 2004 007 716 B3 weiterhin, die Filterkörper durch Vibration oder durch einen auf der Reinseite des Filterkörpers realisierten Druckluftimpuls vom Filterkuchen zu befreien. Der vom Filterkörper abgereinigte Filterkuchen kann durch eine Formation, etwa eine Klappe oder ein verformbarer Bereich, im Boden des Filtergehäuses auf das Transportband abgegeben werden. Das Filtergehäuse ist über dem Transportband angeordnet. Das Transportband ist durch eine Abdeckung von der Außenumgebung abgeschirmt, sodass auf dem Transportband aufliegendes Bodenmaterial nicht oder nur in sehr geringem Umfang vom Transportband während der Förderung bis zum Abgabeort in die Umgebung gelangen kann.

Aufgrund der starken Staubbelastung der vom Absaugort weg geförderten Luft ist die von dem wenigstens einen Filterkörper geforderte Filterleistung erheblich. Dies bedeutet, dass eine große Filterfläche benötigt wird oder/und dass der wenigstens eine Filterkörper verschleißbedingt in verhältnismäßig kurzen Zeitabständen getauscht werden muss, um die gewünschte Filterleistung zu erhalten.

Es ist daher Aufgabe der vorliegenden Erfindung, die eingangs genannte mobile, selbstfahrende Bodenbearbeitungsmaschine derart weiterzubilden, dass ohne Vergrößerung der Filterfläche die Standzeit des wenigstens einen Filterkörpers verlängert werden kann, bis dessen verschleißbedingter Austausch notwendig ist.

Diese Aufgabe wird erfindungsgemäß durch eine mobile, selbstfahrende Bodenbearbeitungsmaschine der eingangs genannten Art gelöst, bei welcher die Filtervorrichtung zum Umschalten zwischen einer Filterung der abgesaugten Luft und lediglich einer Förderung der ungefilterten oder durch einen Vorfilter, wie etwa Zyklonfilter, vorgefilterten abgesaugten Luft ohne weitere Filterwirkung ein zwischen wenigstens zwei unterschiedlichen Betriebsstellungen verstellbares Bypass-Ventil aufweist. In einer Filter-Betriebsstellung verbindet dann das Bypass-Ventil den wenigstens einen Absaugort mit dem Abblasort unter Durchströmung des Filterkörpers. In einer Bypass-Betriebsstellung verbindet das Bypass-Ventil den wenigstens einen Absaugort mit dem Abblasort unter Umgehung des Filterkörpers. Bevorzugt weist das Bypass-Ventil nur die Filter- und die Bypass-Betriebsstellung auf.

Die Standzeit des Filterkörpers kann also dadurch erhöht werden, dass ein Filterbetrieb der Filtervorrichtung nur dann erfolgt, wenn dieser tatsächlich benötigt wird. So ist in ohnehin bereits feinstaubbelasteten Innenstädten ein Betrieb der Filtervorrichtung geboten, um eine Erhöhung der Feinstaubbelastung zu vermeiden, wohingegen während einer Bodenbearbeitung außerhalb von geschlossenen Ortschaften ein Filtern der abgesaugten staubbelasteten Luft nicht unbedingt notwendig ist. Befindet sich der Abblasort ausreichend weit von einem Fahrstand der Bodenbearbeitungsmaschine entfernt, auf welchem eine die Bodenbearbeitungsmaschine steuernde Bedienperson während einer Bodenbearbeitung tätig ist, ist die Staubbelastung der Bedienperson vernachlässigbar. Dann, wenn gemäß einer bevorzugten Weiterbildung die zunächst abgesaugte staubbelastete Luft in einen Kanal abgeblasen wird, welcher eine das abgetragene Bodenmaterial fördernde Transportvorrichtung umgibt, tritt die abgeblasene Luft erst am Abgabe- bzw. Abwurfort des Bodenmaterials von der Transportvorrichtung ins Freie. Dieser Abgabeort ist während eines bestimmungsgemäßen Bodenbearbeitungsbetriebs in der Regel der am weitesten vom Fahrstand entfernte Ort der Bodenbearbeitungsmaschine.

Das Bypass-Ventil kann konstruktiv einfach aufgebaut sein. Es kann ein bewegliches Ventilbauteil aufweisen, welches eine Austrittsmündung eines stromaufwärtigen Förderkanals der staubbelasteten Luft aufweist. Durch Bewegung des Ventilbauteils kann die Austrittsmündung des stromaufwärtigen Förderkanals mit einer gewünschten von zwei Eintrittsmündungen auf einer stromabwärtigen Seite des Bypass-Ventils, insbesondere eines Trennspalts zwischen Austrittsmündung und Eintrittsmündungen, strömungsführend verbunden werden.

Das Bypass-Ventil kann ein relativ zum Filtergehäuse bewegliches Ventilbauteil und ein filtergehäusefestes Ventilbauteil umfassen. Das bewegliche Ventilbauteil kann um eine Ventilachse relativ zum filtergehäusefesten Ventilbauteil um einen vorbestimmten Winkel, zur effektiven Trennung der beiden Betriebsstellungen und somit zur Vermeidung von unerwünschten Fehlstellungen oder Fehlbetätigungen bevorzugt um 180°, schwenkbar sein. Alternativ oder zusätzlich kann das bewegliche Ventilbauteil relativ zum filtergehäusefesten Ventilbauteil translatorisch verschiebbar sein. Mit dem beweglichen Ventilbauteil kann eine Austrittsmündung eines bezüglich des Bypass-Ventils stromaufwärtigen Förderkanals verbunden sein.

Das filtergehäusefeste Ventilbauteil kann die oben genannten zwei Eintrittsmündungen aufweisen, von denen eine erste Eintrittsmündung in ein erstes Kompartiment des Filtergehäuses führt, in welchem wenigstens ein Filterkörper aufgenommen ist, und von denen eine zweite Eintrittsmündung in ein zweites Kompartiment des Filtergehäuses führt, welches keine Filterwirkung entfaltet, etwa, weil im zweiten Kompartiment keine Filterkörper zur Durchströmung mit staubbelasteter Luft angeordnet sind.

Bevorzugt ist das bewegliche Ventilbauteil dabei derart aufgebaut, insbesondere asymmetrisch aufgebaut, dass es diejenige Eintrittsmündung auf Seiten des filtergehäusefesten Ventilbauteils verschließt, welche nicht mit der Austrittsmündung des beweglichen Ventilbauteils verbunden ist. So kann ein unerwünschtes Ansaugen von Falschluft durch das Fördergebläse vermieden werden. Daher kann sich in vorteilhafter Weise die gesamte Förderwirkung des Fördergebläses auf den tatsächlich zur Förderung von staubbelasteter Luft bestimmten Luftstrom beziehen.

Das bewegliche Ventilbauteil oder/und das filtergehäusefeste Ventilbauteil können zur Sicherstellung eines Verschließens der in der jeweiligen Betriebsstellung des Bypass-Ventils nicht aktivierten Eintrittsmündung wenigstens an den aufeinander zuweisenden Seiten der Ventilbauteile mit einer ebenen Grenzfläche ausgebildet sein. Die Eintrittsmündungen oder die Austrittsmündung können mit, vorzugsweise elastischen, besonders bevorzugt elastomeren, zum jeweils anderen Ventilbauteil vorstehenden Dichtungsformationen versehen sein, um einen Trennspalt zwischen dem beweglichen Ventilbauteil und dem filtergehäusefesten Ventilbauteil möglichst gasdicht zu überbrücken. Bevorzugt kann bzw. können das bewegliche Ventilbauteil oder/und das filtergehäusefeste Ventilbauteil ein plattenförmiges, ebenes Bauteil umfassen, von welchem ausgehend wenigstens eine Anschlussformation zum Anschluss eines Luft leitenden Förderkanals auf der stromaufwärtigen Seite des beweglichen Ventilbauteils abstehen kann oder/und wenigstens eine Anschlussformation auf der stromabwärtigen Seite des filtergehäusefesten Ventilbauteils abstehen kann. Bevorzugt steht auf der der stromabwärtigen Seite des filtergehäusefesten Ventilbauteils von jeder Eintrittsmündung je eine Anschlussformation ab.

Grundsätzlich kann das Bypass-Ventil von Hand zwischen seinen unterschiedlichen Luftströmungswegen zugeordneten Betriebsstellungen bewegbar sein. Bevorzugt umfasst das Bypass-Ventil einen Ventilantrieb, welcher auf Betätigung eines Steuerschalters am Fahrstand der Bodenbearbeitungsmaschine das Bypass-Ventil zwischen wenigstens zwei seiner Betriebsstellungen verstellt.

Konstruktiv kann gemäß einer bevorzugten Ausführungsform der erfindungsgemäßen Bodenbearbeitungsmaschine das Bypass-Ventil in der Filter-Betriebsstellung den wenigstens einen Absaugort derart mit dem Filtergehäuse verbinden, dass ein den Filterkörper aufnehmender Innenraum des Filtergehäuses Teil der den wenigstens einen Absaugort mit dem Abblasort verbindenden Strömungsleitung für staubbelastete Luft ist. Weiter kann das Bypass-Ventil in der Bypass-Betriebsstellung den wenigstens einen Absaugort mit dem Abblasort unter Umgehung des den Filterkörper aufnehmenden Innenraums des Filtergehäuses und damit des Filterkörpers verbinden.

In der vorliegenden Anmeldung ist zur Beschreibung der vorgestellten Erfindung von einem Filterkörper die Rede. Dies dient lediglich der Veranschaulichung und ist keine Mengenangabe. Wenngleich ein einziger Filterkörper ausreichen kann, weist die Filtervorrichtung der vorliegenden Erfindung bevorzugt eine Mehrzahl von Filterkörpern auf. Jeder Filterkörper kann um eine Drehachse drehbar im Filtergehäuse gelagert sein. Dann sind bevorzugt die Drehachsen der Filterkörper zur vorteilhaft effizienten Ausnutzung des vorhandenen Bauraums zueinander parallel.

Auch die Filterkörper der vorliegenden Erfindung sind bevorzugt grob-zylindrische Filterkörper mit einer zylindrischen Einhüllenden oder grob-konische Filterkörper mit einer konischen Einhüllenden. Zu den grob-konischen Filterkörpern gehören auch kegelstumpfförmige Filterkörper. An ihren Längsenden können die Filterkörper von einer idealen Zylinder- oder Konusform abweichen, etwa weil die Filterkörper eine Kopplungsformation zur Kopplung mit einer Kopplungsgegenformation am Filtergehäuse erfordern oder/und weil von der Einhüllenden eingehülltes poröses Filtermaterial des Filterkörpers an beiden Längsendbereichen des Filterkörpers körperlich, etwa durch entsprechende Endstücke lagedefiniert sein soll.

Die vorliegend diskutierte mobile Bodenbearbeitungsmaschine ist eine selbstfahrende Bodenbearbeitungsmaschine, welche einen von einer Mehrzahl von Ketten-oder/und Radlaufwerken höhenverstellbar getragenen Maschinenrahmen aufweist. Der Maschinenrahmen trägt wiederum - bevorzugt bestimmungsgemäß lösbar - die Arbeitsvorrichtung, welche gemäß einer bevorzugten Ausführungsform eine Fräswalze mit einem zylindrischen Grundkörper ist, auf welchem Fräsmeißel, und vorzugsweise auch Auswerfer, angeordnet sind. Das eingangs genannte Arbeitsvorrichtungsgehäuse, welches die Bodenbearbeitungsmaschine zur Abschirmung der Arbeitsvorrichtung in vorteilhafter Weiterbildung aufweist, ist dann ein sogenannter "Fräswalzenkasten". Zum erleichterten Wechsel der während der abtragenden Bodenbearbeitung stark verschleißbeanspruchten Fräsmeißel sind an der Außenseite des zylindrischen Grundkörpers Meißelwechselhalter angeordnet, in welchen Fräsmeißel bestimmungsgemäß lösbar aufgenommen sind. Zum erleichterten Abtransport des durch die Fräsmeißel vom Boden abgetragenen Bodenmaterials sind die Meißelwechselhalter bevorzugt grob wendelförmig auf dem Grundkörper angeordnet, um bei Rotation der Fräswalze eine auf das abgetragene Bodenmaterial ausgeübte axiale Förderwirkung längs der Rotationsachse der Fräswalze zu erzielen. Üblicherweise verlaufen von jedem axialen Längsende der Fräswalze je wenigstens eine Meißelwechselhalter-Wendel zur axialen Fräswalzenmitte hin, um von jedem Längsende eine axiale Förderwirkung zur axialen Fräswalzenmitte zu erzeugen.

Zur Förderung der staubbelasteten Luft kann die Bodenbearbeitungsmaschine in vorteilhafter Weiterbildung der Erfindung ein Fördergebläse aufweisen, wobei die Filtervorrichtung, insbesondere der Filterkörper, bevorzugt auf der Saugseite des Fördergebläses liegt, sodass die vom Fördergebläse geförderte Luft das Fördergebläse in gereinigtem Zustand erreicht. Je weniger Staubpartikel in der geförderten Luft enthalten sind, desto weniger abrasiv wirkt die geförderte Luft auf das Fördergebläse. Das Fördergebläse kann einen gegenüber staubbelasteter Luft robusten Axiallüfter umfassen. Alternativ kann das Fördergebläse einen weniger Bauraum als ein Axiallüfter gleicher Förderleistung einnehmenden Radiallüfter umfassen.

Wenn in der vorliegenden Anmeldung von einer bestimmungsgemäß lösbaren Anordnung die Rede ist, so ist damit eine zerstörungsfrei lösbare Anordnung bezeichnet, wie sie beispielsweise durch Schraubverbindungen, Bajonettverbindungen und dergleichen bewirkt werden kann, im Gegensatz zu nicht-lösbaren Anordnungen, wie beispielsweise Schweiß- oder Nietverbindungen, welche lediglich zerstörend aufgehoben werden können.

Ein Abschnitt weist gemäß der vorliegenden Anmeldung in eine Richtung, wenn eine von dem Abschnitt ausgehende Flächennormale eine Komponente aufweist, welche in die angegebene Richtung weist.

Ein verschlissener Filterkörper kann dadurch besonders einfach und schnell gegen einen unverschlissenen ausgetauscht werden, wenn er an einem Längsende, bevorzugt nur an einem Längsende, mit einer Filterkörperaufnahme lösbar koppelbar ist. Dabei reicht es zur Erzielung einer bevorzugten Drehbarkeit des Filterkörpers aus, wenn die am Filtergehäuse angeordnete Filterkörperaufnahme um die Drehachse drehbar im oder am Filtergehäuse aufgenommen ist. Der Filterkörper selbst braucht dann keinerlei Drehbarkeit bereitzustellen oder/und keinerlei Formation aufzuweisen, um von einem Drehantrieb ein Antriebsdrehmoment auf den Filterkörper zu übertragen. Eine solche mit dem Drehantrieb wechselwirkende Formation kann alleine an der Filterkörperaufnahme ausgebildet sein.

Grundsätzlich weist der Filterkörper eine bezüglich einer Betriebsströmungsrichtung der staubbelasteten Luft vom Absaugort zum Abblasort stromaufwärts eines die Filterwirkung des Filterkörpers bereitstellenden porösen Filtermaterials gelegene Schmutzseite und eine stromabwärts des Filtermaterials gelegene Reinseite auf.

Sofern in der vorliegenden Anmeldung nichts Abweichendes gesagt ist, beziehen sich die Angaben "stromaufwärts" und "stromabwärts" auf die Betriebsströmungsrichtung der staubbelasteten Luft vom Absaugort zum Abblasort.

Der Absaugort liegt näher bei der Arbeitsvorrichtung als der Abblasort, weil in einem zur Arbeitsvorrichtung führenden Luftkanal die Staubbelastung der Luft mit zunehmender Annäherung an die Arbeitsvorrichtung ansteigt.

Um die Belastung des Filterkörpers der Filtervorrichtung im Filterbetrieb zu verringern, kann die Filtervorrichtung einen vom Filterkörper verschiedenen Vorfilter aufweisen, welcher bevorzugt außerhalb des Filtergehäuses angeordnet ist, sodass nur vorgereinigte staubbelastete Luft zum Filterkörper geleitet wird. Als derartige Vorfilter haben sich sogenannte Zyklonfilter bewährt, welche Staubpartikel oberhalb einer bestimmten Korngröße aus der staubbelasteten Luft entfernen. Somit erreichen den wenigstens einen Filterkörper im Filtergehäuse bevorzugt nur Staubpartikel unterhalb einer bestimmten Korngröße oder eines bestimmten Korngrößenbereichs. Das Filtermaterial des Filterkörpers kann hinsichtlich seiner Porosität und seiner Durchlässigkeit auf den Korngrößenbereich der Staubpartikel in der vorgereinigten Luft besonders gut abgestimmt werden, sodass die Reinigungswirkung des Filterkörpers weiter erhöht werden kann.

Wie eingangs bereits geschildert, weist die Bodenbearbeitungsmaschine bevorzugt eine Transportvorrichtung auf, durch welches von der Arbeitsvorrichtung abgetragenes Bodenmaterial in Richtung von der Arbeitsvorrichtung weg zu einem Abgabeort förderbar ist. Um die pro Zeiteinheit anfallenden Mengen an abgetragenem Bodenmaterial sicher abtransportieren zu können umfasst die Transportvorrichtung bevorzugt als Transportmittel wenigstens ein Förderband, vorzugsweise wenigstens zwei in Förderrichtung aufeinander folgende Förderbänder, welche zur Reduzierung der Schmutzbelastung der Umgebung der Bodenbearbeitungsmaschine über wenigstens 90 % ihrer Förderstrecke eingehaust ist bzw. sind. Es sind jedoch auch andere Transportvorrichtungen nicht ausgeschlossen, wie beispielsweise Schneckenförderer und dergleichen.

Gemäß einer vorteilhaften Weiterbildung ist das Filtergehäuse über der Transportvorrichtung angeordnet. Dann kann das, in der Regel mineralisch gebundene, Staubpartikelmaterial schwerkraftgetrieben das Filtergehäuse verlassen und die Transportvorrichtung erreichen, wo es mit dem abgetragenem Bodenmaterial zum Abgabeort transportiert wird.

Die vorliegende Erfindung wird nachfolgend anhand der beiliegenden Zeichnungen erläutert. Es stellt dar:
- Fig. 1: eine grobschematische Seitenansicht einer erfindungsgemäßen Bodenbearbeitungsmaschine während einer Bodenmaterial abtragenden Bearbeitung,
- Fig. 2: eine ausschnittsweise Vergrößerung des Abwurfbandes der Transportvorrichtung mit daran angeordneter Filtervorrichtung der Bodenbearbeitungsmaschine von Figur 1 in perspektivischer Ansicht,
- Fig. 3: eine perspektivische grobschematische Ansicht der Filtervorrichtung von Figur 2, einschließlich Vorfilter der Bodenbearbeitungsmaschine von Figur 1,
- Fig. 4: eine perspektivische grobschematische Ansicht der Filtervorrichtung von Figur 3, ohne Vorfilter, von schräg vorne und oben,
- Fig. 5: eine vergrößerte grobschematische Seitenansicht des Bypass-Ventils der Filtervorrichtung der Bodenbearbeitungsmaschine von Figur 1, und
- Fig. 6: eine grobschematische beispielhafte Querschnittansicht durch das Filtermaterial eines Filterkörpers der Filtervorrichtung der Figuren 1 bis 5.

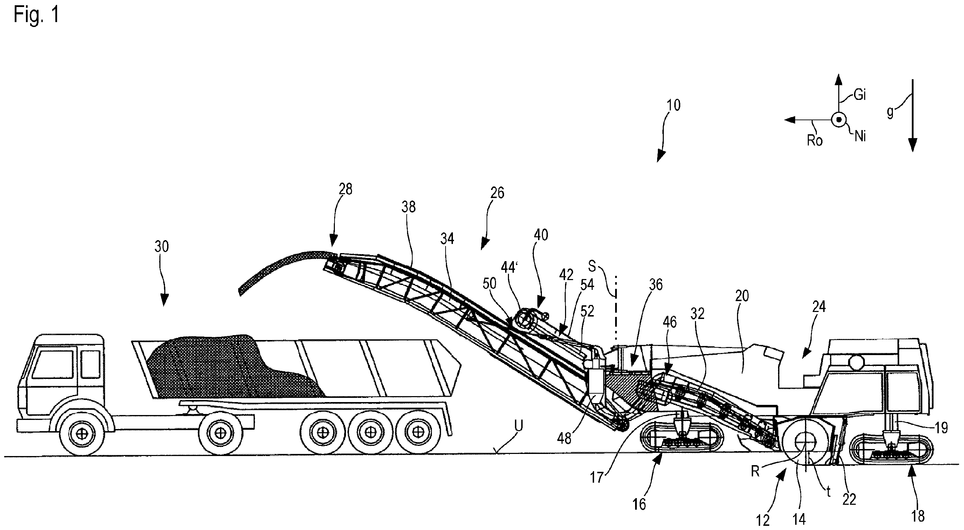

In Figur 1 ist eine erfindungsgemäße Bodenbearbeitungsmaschine (nachfolgend kurz als "Maschine" bezeichnet) allgemein mit 10 bezeichnet. Beispielhaft ist als erfindungsgemäße Maschine 10 eine Straßengroßfräse dargestellt, deren Arbeitsvorrichtung 12 mit einer an sich bekannten Fräswalze 14, wie für Straßengroßfräsen typisch, zwischen den vorderen Fahrwerken 16 und den hinteren Fahrwerken 18 angeordnet ist. Die jeweils vorzugsweise durch einen nicht dargestellten Hydromotor zur Vortriebsbewegung antreibbaren Fahrwerke 16 und 18 sind lenkbar und tragen einen Maschinenrahmen 20, welche wiederum die Arbeitsvorrichtung 12 trägt. Die Maschine 10 ist somit ein selbstfahrendes Fahrzeug.

Die Schwerkraftwirkungsrichtung ist in den Figuren 1 bis 3 mit einem Pfeil g gekennzeichnet.

Die um eine zur Zeichenebene von Figur 1 orthogonale, parallel zur Nickachse Ni der Maschine 10 verlaufende Rotationsachse R rotierbare Fräswalze 14 ist durch einen Fräswalzenkasten 22, welcher die Fräswalze 14 um die Rotationsachse R rotierbar lagert, zur Außenumgebung der Maschine 10 abgeschirmt. Der Fräswalzenkasten 22 ist zum Untergrund U, auf welchem die Maschine 10 mit den Fahrwerken 16 und 18 aufsteht, und welchen die Fräswalze 14 abträgt, hin offen, um die bestimmungsgemäße Bodenbearbeitung der Maschine 10 zu ermöglichen.

Der Maschinenrahmen 20 ist längs der Gierachse Gi höhenverstellbar über vordere Hubsäulen 17 und hintere Hubsäulen 19 mit den Fahrwerken 16 und 18 verbunden, wodurch beispielsweise die Frästiefe t der Fräswalze 14 einstellbar ist.

Die Maschine 10 ist von einem Fahrstand 24 aus steuerbar. Der Fahrstand 24 kann in an sich bekannter Weise überdacht sein.

Von der Fräswalze 14 während der bestimmungsgemäßen Bodenbearbeitung abgetragenes Bodenmaterial wird von einer Transportvorrichtung 26 von der Arbeitsvorrichtung 12 zu einem Abgabeort 28 gefördert, wo es im dargestellten Beispiel einem die Maschine 10 während der Bodenbearbeitung mit Abstand in Richtung der Rollachse Ro vorausfahrend-begleitenden Transport-Lkw 30 übergeben wird.

Die Transportvorrichtung 26 umfasst ein näher bei der Arbeitsvorrichtung 12 gelegenes Aufnahmeband 32 und ein mit dem Aufnahmeband 32 kooperierendes, weiter von der Arbeitsvorrichtung 12 entfernt gelegenes Abwurfband 34. Das Aufnahmeband 32 ist umlauffähig, aber hinsichtlich seiner relativen Orientierung zum Maschinenrahmen 20 unveränderlich am Maschinenrahmen 20 gelagert. An einer Übergabestelle 36 übergibt das Aufnahmeband 32 das von ihm geförderte Material an das Abwurfband 34, welches das übernommene Material bis zum Abgabeort 28 fördert. Das Abwurfband 34 ist ebenfalls umlauffähig, jedoch relativ zum Maschinenrahmen 20 um eine gierachsenparallele Schwenkachse S schwenkbar und um eine zur Schwenkachse S orthogonale Neigeachse neigbar, sodass der Abgabeort 28, welcher mit dem abwerfenden Längsende des Abwurfbands 34 zusammenfällt, in etwa auf der Oberfläche einer Kugelkalotte beweglich ist, um den Abgabeort 28 an das jeweilige Begleitfahrzeug anzupassen.

Die Transportvorrichtung 26 ist längs ihrer gesamten Länge durch eine Einhausung 38 eingehaust, um eine Belastung der Außenumgebung der Transportvorrichtung 26 durch Staub und durch von der Transportvorrichtung 26 möglicherweise herabfallendes Material zu vermeiden. Der über dem Aufnahmeband 32 gelegene Teil der Einhausung 38 ist größtenteils durch den Maschinenrahmen 20 realisiert.

Zur weiteren Verringerung der Schmutzemission, insbesondere Staubemission, der Maschine 10 durch die Arbeitsvorrichtung 12 umfasst diese eine Absaugeinrichtung 40 mit einer Filtervorrichtung 42.

Um anzudeuten, dass die Absaugeinrichtung 40 in unterschiedlicher Weise ausgestaltet sein kann, ist in Figur 1 die Absaugeinrichtung 40 mit einem Fördergebläse 44' am oberen Ende eines Filtergehäuses 54 dargestellt. Die Filtervorrichtung 42 ist auf der Saugseite des Fördergebläses 44' gelegen, sodass durch die Filtervorrichtung 42 gereinigte Luft das Fördergebläse 44' der Absaugeinrichtung 40 von Figur 1 durchsetzt.

Die Absaugeinrichtung 40 saugt staubbelastete Luft an einem Absaugort 46 an, der beispielsweise über dem Aufnahmeband 32 gelegen sein kann, und fördert die staubbelastete Luft in der angegebenen Reihenfolge durch einen Vorfilter 48 und durch die Filtervorrichtung 42 zu einem Abblasort 50, welcher entweder ein Auslass am Fördergebläse 44' sein kann, der direkt in die Außenumgebung der Maschine 10 abbläst, oder welcher über dem Abwurfband 34 eine Mündung in der Einhausung 38 sein kann, durch welche hindurch die gereinigte Luft wieder zurück zur Transportvorrichtung 26 gegeben wird, sodass die gereinigte Luft zusammen mit dem abgetragenen Bodenmaterial am Abgabeort 28 in die Umgebung der Maschine 10 austritt.

In der Filtervorrichtung 42 ist ein Filterkörper 52 gezeigt, dessen Längsachse im Wesentlichen parallel zur Transportrichtung bzw. zur Verlaufsrichtung des Abwurfbandes 34 orientiert ist.

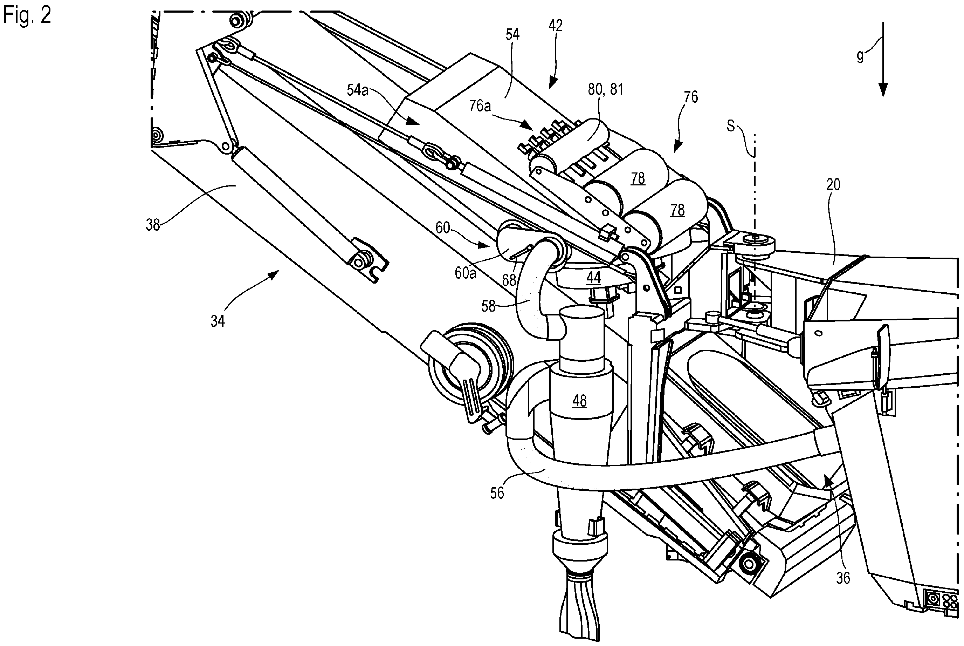

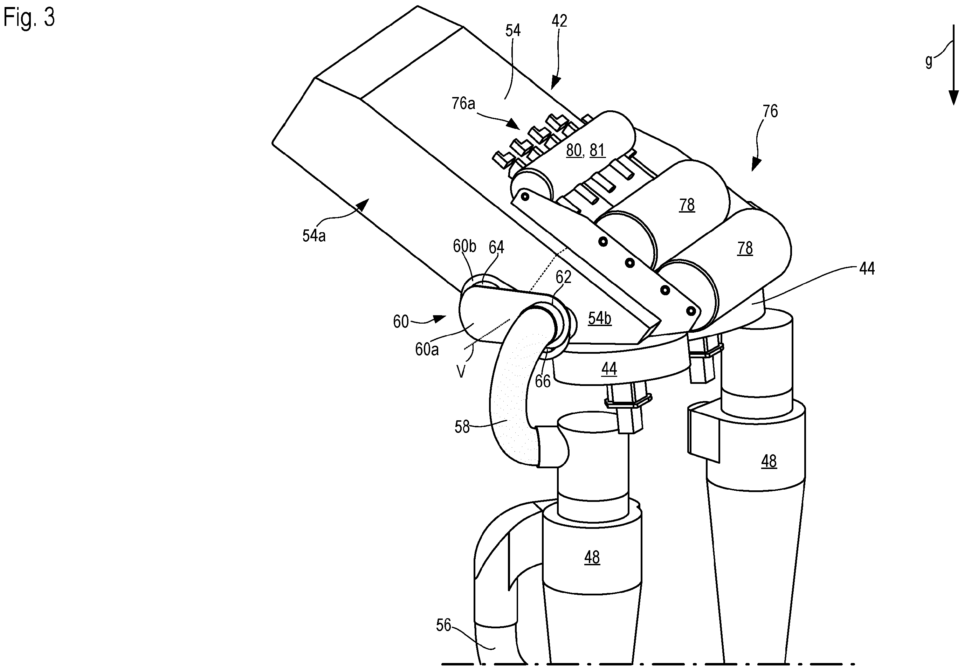

In den Figuren 2 und 3 ist die Filtervorrichtung 42 stärker detailliert als in Figur 1 dargestellt. Die Filtervorrichtung 42 umfasst das Filtergehäuse 54, in welchem im dargestellten Beispiel zwei, ganz allgemein jedoch eine Mehrzahl von Filterkörpern 52 angeordnet sind bzw. ist.

In den Figur 2 und 3 ist das Fördergebläse 44 abweichend von Figur 1 in einem unteren Abschnitt des Filtergehäuses 54 dargestellt. Jedoch liegt das Filtergehäuse 54 bzw. die Filtervorrichtung 42 wie in Figur 1 funktional auf der Saugseite des Fördergebläses 44.

Figur 3 zeigt insbesondere die spiegelsymmetrische Ausgestaltung der Absaugeinrichtung 40 hinsichtlich der ersten und der zweiten Schlauchleitungen 56 bzw. 58, der Vorfilter 48 und der Fördergebläse 44, welche jeweils je zweifach bezüglich einer von der Gierachse Gi und der Rollachse Ro aufgespannten Spiegelsymmetrieebene vorgesehen sind, wobei die Spiegelsymmetrie für einen gestreckten Bezugszustand gilt, in welchem das Abwurfband 34 und die Transportrichtung des Abwurfbandes 34 in der Spiegelsymmetrieebene gelegen sind.

Durch eine erste Schlauchleitung 56 wird vom Fördergebläse 44 staubbelastete Luft vom Absaugort 46 zu dem als Zyklonfilter ausgestalteten Vorfilter 48 gefördert, wo in an sich bekannter Weise eine Vorreinigung der staubbelasteten Luft erfolgt. Über eine zweite Schlauchleitung 58 wird die vorgereinigte und in der Regel nur noch durch Feinstaub mit einer Korngröße unterhalb einer durch den Zyklonfilter bestimmten Schwellengröße belastete Luft einem Bypass-Ventil 60 zugeführt, von wo aus die vorgereinigte Luft in das Filtergehäuse 54 eintritt.

Das Filtergehäuse 54 weist ein größeres Kompartiment 54a auf, in welchem die Filterkörper 52 aufgenommen sind, und weist ein kleineres Kompartiment 54b auf, in welchem keine Filterkörper 52 aufgenommen sind. Die Filterkörper 52 befinden sich also in einem Innenraum 57 des Filtergehäuses 54 bzw. des Kompartiments 54a.

Das Bypass-Ventil 60 umfasst ein relativ zum Filtergehäuse 54 bewegliches Ventilbauteil 60a und ein filtergehäusefestes Ventilbauteil 60b. Das bewegliche Ventilbauteil 60a kann beispielsweise um eine Ventilachse V relativ zum filtergehäusefesten Ventilbauteil 60b um 180° schwenkbar sein. Mit dem beweglichen Ventilbauteil 60a ist eine Austrittsmündung 62 der zweiten Schlauchleitung 58 als einem bezüglich des Bypass-Ventils 60 stromaufwärtigen Förderkanal über eine vom bevorzugt plattenförmig, eben ausgebildeten beweglichen Ventilbauteil 60a abstehende Anschlussformation 61 verbunden, während das filtergehäusefeste Ventilbauteil 60b zwei Eintrittsmündungen 64 und 66 aufweist, von denen die Eintrittsmündung 64 über eine Anschlussformation 63a in das Kompartiment 54a des Filtergehäuses 54 führt, in welchem Filterkörper 52 aufgenommen sind, wohingegen die Eintrittsmündung 66 über eine Anschlussformation 63b in das Kompartiment 54b ohne Filterkörper führt. Ein Handgriff 68 dient der Verstellung des Bypass-Ventils 60 zwischen seiner Filter-Betriebsstellung, in welcher das Bypass-Ventil 60 die Austrittsmündung 62 mit der Eintrittsmündung 64 verbindet, und der Bypass-Betriebsstellung, in welcher das Bypass-Ventil 60 die Austrittsmündung 62 mit der Eintrittsmündung 66 verbindet. Alternativ kann anstelle des Handgriffs 68 auch ein motorischer Antrieb zur Verstellung des Bypass-Ventils 60 zwischen seinen beiden Betriebsstellungen vorgesehen sein.

Vom filtergehäusefesten Ventilbauteil 60b können von der zum beweglichen Ventilbauteil 60a hinweisenden Grenzfläche 60b1 je eine die jeweilige Eintrittsmündung 64 bzw. 66 umgebende elastische Dichtungsformation 65a bzw. 65b abstehen, um einen Trennspalt zwischen den Ventilbauteilen 60a und 60b gasdicht zu überbrücken.

Das Fördergebläse 44 saugt Luft stets über das von Filterkörpern 52 freie, vorzugsweise kleinere Kompartiment 54b des Filtergehäuses 54 ab. Je nach Stellung des Bypass-Ventils 60 saugt dabei das Fördergebläse 44 Luft über die Filterkörper 52 im Kompartiment 54a oder unmittelbar über die Eintrittsmündung 66 ohne weitere Filterung an.

Das, vorzugsweise plattenförmige, bewegliche Ventilbauteil 60a ist dabei derart asymmetrisch gebaut, dass es diejenige Eintrittsmündung auf Seiten des filtergehäusefesten Ventilbauteils 60b verschließt, welche nicht mit der Austrittsmündung 62 des beweglichen Ventilbauteils 60a verbunden ist. So wird ein unerwünschtes Ansaugen von Falschluft durch das Fördergebläse 44 vermieden, sodass die gesamte Förderwirkung des Fördergebläses 44 sich auf den tatsächlich zur Förderung bestimmten Luftstrom bezieht.

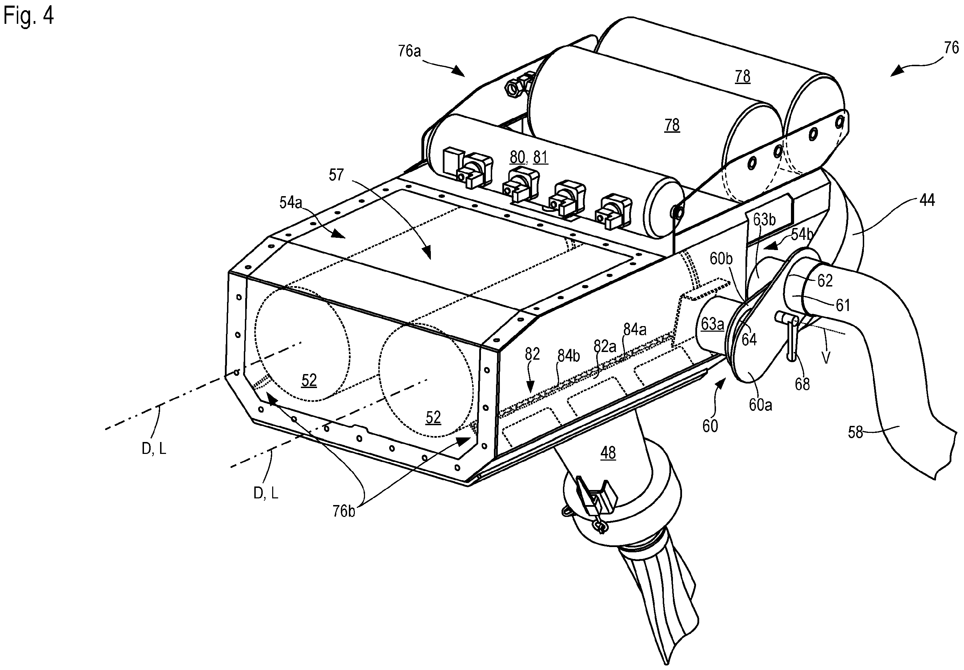

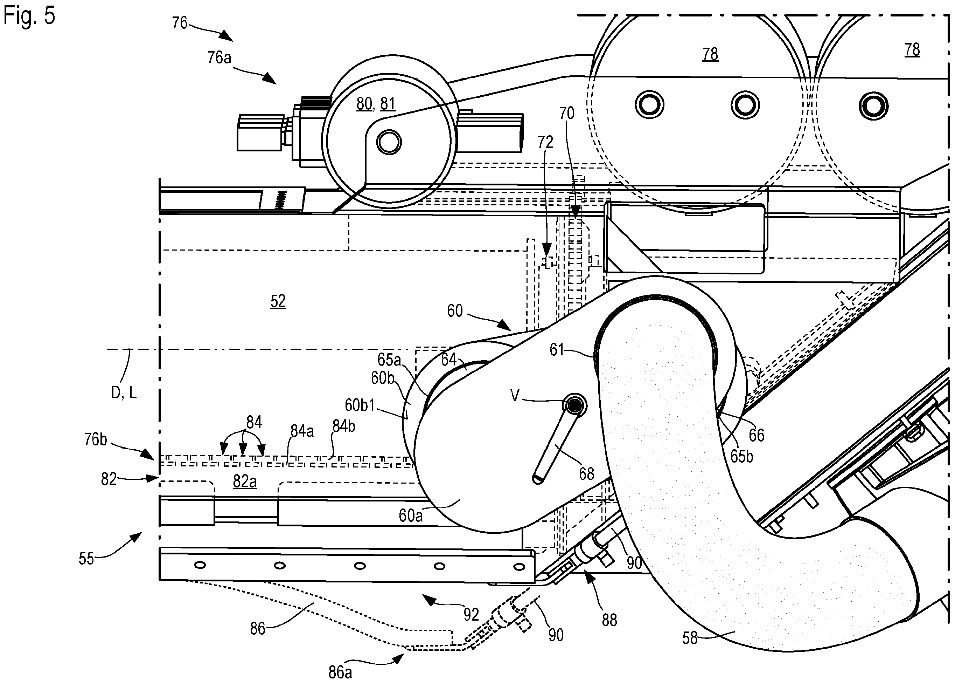

In Figur 4 sind beispielhaft zwei Filterkörper 52 strichliniert im Innenraum 57 des Kompartiment 54a dargestellt. Beide Filterkörper 52 erstrecken sich jeweils längs einer Längsachse L, die auch Drehachse D des jeweiligen Filterkörpers 52 ist. Die Filterkörper 52 sind mit parallelen Längsachsen L angeordnet. Die Filterkörper 52 sind jeweils um die Drehachse D durch einen in Figur 5 gezeigten Drehantrieb 70 drehbar.

Die Filterkörper 52 sind an nur einem Längsende fliegend an Drehlagerungen 72 gelagert, von welchen aus sie längs ihrer Längsachse L bzw. Drehachse D auskragen. Die Drehlagerungen 72, die Ausführungsformen oben genannter Filterkörperaufnahmen darstellen, sind am Filtergehäuse 54 angeordnet und weisen eine Kopplungsformation auf, mit welcher eine Gegenkopplungsformation an einem Filterkörper 52 lösbar koppelbar ist. Dadurch können Filterkörper 52 zum einen schnell getauscht und zum anderen ohne eigene Relativbewegungsmittel drehbar um die Drehachse D im Filtergehäuse 54 angeordnet werden. Der Drehantrieb 70 wirkt bevorzugt unmittelbar mit Drehlagerungen 72 zusammen, sodass der Filterkörper 52 selbst keinerlei Ausbildung für eine unmittelbare Kraftübertragung mit dem Drehantrieb 70 aufweisen muss. Der Drehantrieb 70 und die Drehlagerungen 72 können miteinander kämmende Zahnräder bzw. Zahnstrukturen aufweisen, wobei das Zahnrad des Drehantriebs 70 durch einen Motor angetrieben ist. Dieser Motor kann ein Hydromotor oder, bevorzugt, ein Elektromotor sein.

Durch die Drehbarkeit der Filterkörper 52 kann stets ein anderer Umfangsabschnitt des Filterkörpers 52 so angeordnet werden, dass er in Schwerkraftwirkungsrichtung g weist, sodass folglich die Schwerkraft ein Lösen und Abfallen von Filterkuchen unterstützt, welche sich auf der Schmutzseite von Filtermaterial der Filterkörper 52 im Filterbetrieb ansammeln. Ein Umfangsabschnitt des Filterkörpers 52 weist dann in Schwerkraftwirkungsrichtung g, wenn ein von der Oberfläche des Filtermaterials oder von der Einhüllenden des Filtermaterials ausgehender Normalenvektor wenigstens eine in Schwerkraftwirkungsrichtung verlaufende Komponente aufweist.

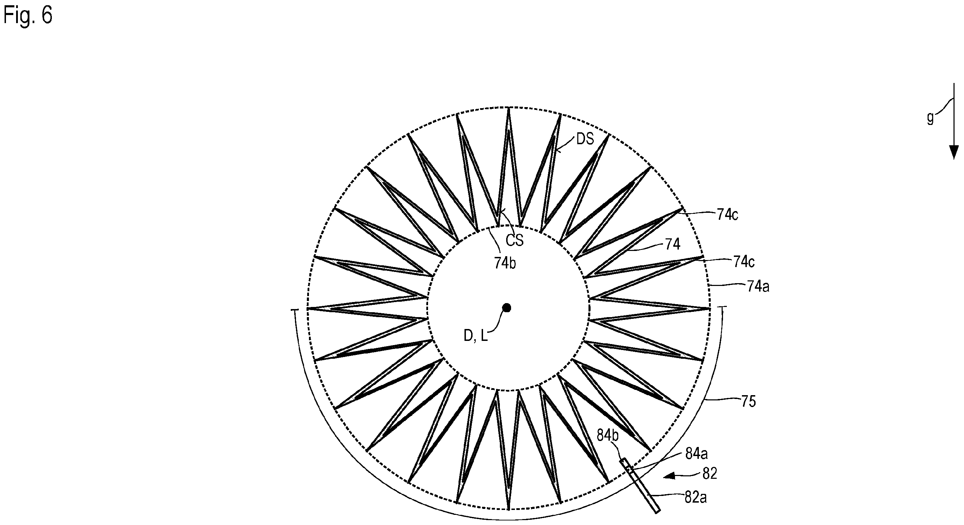

In Figur 6 ist eine simplifizierte Querschnittsansicht durch den Filterkörper 52 in einer zur Drehachse D orthogonalen Schnittebene dargestellt. Das Filtermaterial 74 ist im dargestellten Beispiel ein plissiertes Filtermaterial 74, welches zickzackförmig zwischen einer beispielhaft zylindrischen radial äußeren Einhüllenden 74a und einer beispielhaft zylindrischen radial inneren Einhüllenden 74b um die Drehachse D verläuft. Lediglich zur Erläuterung: Für die beispielhaft in Figur 6 gezeigte Schwerkraftwirkungsrichtung g weist der Umfangsabschnitt 75 des Filtermaterials 74 in Schwerkraftwirkungsrichtung g. Die von der Drehachse D wegweisende Seite des Filtermaterials 74 ist die Schmutzseite DS, auf welcher sich im Filterbetrieb Filterkuchen bildet. Die entgegengesetzte, zur Drehachse D hinweisende Seite des Filtermaterials 74 ist die Reinseite CS, auf welcher nach dem Durchgang durch das Filtermaterial 74 gereinigte Luft strömt. Das Filtermaterial 74 kann ein beliebiges poröses Material sein, wie etwa ein Filtervlies oder ein Filterpapier.

Zur Abreinigung von Filterkuchen vom Filtermaterial 74 der Filterkörper 52 weist die Filtervorrichtung 42 eine Reinigungsvorrichtung 76 auf. Die Reinigungsvorrichtung 76 umfasst im dargestellten Beispiel eine pneumatische Reinigungs-Teilvorrichtung 76a und eine mechanische Reinigungs-Teilvorrichtung 76b.

Die pneumatische Reinigungs-Teilvorrichtung 76a umfasst im dargestellten Beispiel zwei Drucklufttanks 78 und eine mit den Drucklufttanks 78 pneumatisch verbundene Ventilanordnung 80, welche dazu ausgebildet ist, Druckluft aus den Drucklufttanks 78 stoßartig zur Reinseite CS des Filtermaterials 74 der Filterkörper 52 auszulassen, sodass den Luftdruck auf der Reinseite CS gegenüber der Schmutzseite DS erhöhende Druckstöße auf das Filtermaterial 74 ausgeübt werden. Durch diese Druckstöße kann auf der Schmutzseite DS liegender Filterkuchen von der Schmutzseite DS gelöst oder sogar abgeworfen werden. Durch die Druckstöße kann auch eine das Lösen von Filterkuchen auf der Schmutzseite DS unterstützende Verformung des Filtermaterials 74 bewirkt werden. Im Gehäuse der Ventilanordnung 80 kann eine Steuervorrichtung 81 aufgenommen sein, welche den Betrieb der pneumatischen Reinigungs-Teilvorrichtung 76a und des Drehantriebs 70 steuert.

Die von der pneumatischen Reinigungs-Teilvorrichtung 76a bewirkten Druckstöße sind hinsichtlich ihrer Dauer oder/und des Abstandes zwischen zwei aufeinanderfolgenden Druckstößen auf die Drehbewegung der Filterkörper 52 abgestimmt, sodass sichergestellt ist, dass nicht stets der gleiche Umfangsabschnitt des Filtermaterials 74 in Schwerkraftwirkungsrichtung g weist, wenn ein Druckstoß ausgeübt wird. So kann gewährleistet werden, dass während einer Reinigungsprozedur der vollständige Umfang des Filterkörpers 52 von der Reinigungswirkung erfasst wird.

Alternativ oder, wie im dargestellten Ausführungsbeispiel, zusätzlich zur pneumatischen Reinigung ist eine mechanische Reinigungs-Teilvorrichtung 76b vorgesehen, welche die Reinigung des Filtermaterials 74 durch mechanische Belastung desselben unterstützt.

Die mechanische Reinigungs-Teilvorrichtung 76b umfasst eine Abstreiferleiste 82, welche sich längs der Längs- bzw. Drehachse L bzw. D des Filterkörpers 52 erstreckt. Bevorzugt erstreckt sich die Abstreiferleiste durch die radial äußere, im dargestellten Beispiel zylindrische Einhüllende 74a hindurch zur Drehachse D des Filterkörpers 52 hin, wie dies in Figur 6 dargestellt ist. Bei Drehung des Filterkörpers 52 um die Drehachse D streifen dann die radial äußeren Falten 74c des plissierten Filtermaterials an der Abstreiferleiste 82 ab, wodurch zum einen vorübergehend der Abstand zwischen zwei in Umfangsrichtung unmittelbar aufeinanderfolgenden radial äußeren Falten 74c vergrößert wird, sodass zwischen diesen Falten aufgenommener Filterkuchen leichter herausfallen kann, und wodurch zum anderen nach einem Ende des Anlageeingriffs der Abstreiferleiste 82 mit einer radial äußeren Falte 74c eine auf die radial äußere Falte 74c wirkende, in Umfangsrichtung verformende Kraft schlagartig endet, sodass sich die zunächst in Umfangsrichtung verformte radial äußere Falte 74c aufgrund ihrer Materialelastizität in ihre ursprüngliche Gestalt zurückstellt, was eine weitere Filterkuchen lösende Auswirkung haben kann. Schließlich streift die Abstreiferleiste 82 mechanisch an wenigstens einem Teil des Filtermaterials 74 entlang und schabt so Filterkuchen vom Filtermaterial 74 mechanisch ab.

Zur Schonung des porösen und daher möglicherweise empfindlichen Filtermaterials 74 weist die Abstreiferleiste 82 auf ihrer zur Drehachse D hinweisenden Seite eine Mehrzahl von Vorsprüngen 84 auf, welche jeweils von einem Trägerbereich 82a der Abstreiferleiste 82 zur Drehachse D und somit zum Filterkörper 52 hin auskragen. Jeder Vorsprung 84 weist dabei einen näher beim Trägerbereich 82a gelegenen, vorzugsweise einstückig mit diesem verbundenen Stegbereich 84a und einen an den Stegbereich 84a zur Drehachse D hin anschließenden, vorzugsweise einstückig mit diesem verbundenen Abstreifbereich 84b auf. Der Stegbereich 84a eines Vorsprungs 84 ist in Längsrichtung der Abstreiferleiste 82 kürzer ausgebildet als der Abstreifbereich 84b, welcher den Stegbereich 84a vorzugsweise in Längsrichtung der Abstreiferleiste 82 beidseitig überragt. Somit stellt der Abstreifbereich 84b eines jeden Vorsprungs 84 eine möglichst große Abstreiflänge bereit und definiert der Stegbereich 84a den Verformungswiderstand des Vorsprungs 84 und damit die von der Abstreiferleiste 82 auf das Filtermaterial 74 ausgeübte maximale Belastung. Die Abstreiferleiste 82 kann so in vorteilhafter Weise aus nicht-rostendem Stahlblech hergestellt sein. Vorzugsweise sind alle Vorsprünge 84 identisch ausgebildet.

Das Filtergehäuse 54 weist einen im betriebsfertig montierten Zustand der Filtervorrichtung 42 zum Abwurfband 34 hinweisenden Gehäuseboden 86 auf, welcher in Figur 5 strichliniert in einer vom restlichen Filtergehäuse 55, also dem Filtergehäuse 54 ohne Gehäuseboden 86, abgehobenen Stellung gezeigt ist. In der gewöhnlichen, nicht abgehobenen Stellung ist der Gehäuseboden 86 von der Seitenwand des Filtergehäuses 54 verdeckt.

Der Gehäuseboden 86 ist aus einem Elastomer-Material hergestellt, wie etwa Kautschuk, Gummi, Silikongummi usw. Der Gehäuseboden 86 kann durch Einlagen, wie etwa Gewebe oder Gelege, verstärkt sein, um die Reißfestigkeit des Gehäusebodens 86 zu erhöhen. Das restliche Filtergehäuse 55 ist im dargestellten Beispiel aus Metallblech gebaut. Dies muss jedoch nicht so sein. Das Filtergehäuse 54 kann mehr als nur eine Wandung aus einem Elastomer-Material aufweisen.

An seinem in der bezüglich der Schwerkraftwirkungsrichtung g geneigten Einbausituation, wie sie in den Figuren 1 bis 3 erkennbar ist, unteren Ende 86a ist der Gehäuseboden 86 mit einem am Filtergehäuse 54 oder an der Einhausung 38 festgelegten Aktuator 88 gekoppelt. Der Aktuator 88 kann ein pneumatischer oder ein hydraulischer Aktuator sein und kann etwa eine aus einem Zylinder ausfahrbare und in diesen einziehbare Kolbenstange als Betätigungsglied 90 umfassen, oder kann ein elektrischer oder elektromagnetischer Aktuator sein, dessen Betätigungsglied 90 elektrisch oder elektromagnetisch verlagerbar ist.

In seiner ausgefahrenen Stellung ist das Betätigungsglied 90 des Aktuators 88 strichliniert gezeigt. In dieser ausgefahrenen Stellung des Betätigungsglied 90 ist das untere Längsende 86a des Gehäuseboden 86 vom restlichen Filtergehäuse 55 abgehoben, sodass zwischen dem Gehäuseboden 86, genauer zwischen dessen unterem Längsende 86a und dem restlichen Filtergehäuse 55 eine Auslassöffnung 92 gebildet ist, durch welche hindurch Material zur Transportvorrichtung 26, genauer zum Abwurfband 34 hin aus dem Innenraum 57 des Filtergehäuses 54 ausgelassen werden kann, welches sich im Filtergehäuse 54, insbesondere in dem die Filterkörper 52 aufnehmenden Kompartiment 54a im Laufe des Betriebs angesammelt hat. Es handelt sich dabei in der Regel um Material, welches die abgesaugte Luft mitgeführt hat, und welches durch die Filterkörper 52 aus der Luft herausgefiltert wurde oder/und welches sich an den Innenwänden des Filtergehäuses 54 abgelagert hat. Das Material kann abgetragenes Bodenmaterial in Form von Staub bis hin zu Scherben von verbacktem Material umfassen.

Das abgetragene Bodenmaterial weist üblicherweise eine hohe Feuchte auf, da in den Fräswalzenkasten 22 üblicherweise Wasser eingespritzt wird, um eine übermäßige Staubentwicklung zu unterbinden und die Fräsmeißel zu kühlen. Das mineralische abgetragene Bodenmaterial neigt in feuchter Umgebung zum Verbacken, eine Eigenschaft die man sich gerade für das Binden von Staub durch Einspritzen von Wasser zunutze macht. Es können sich so mineralische, steinharte Ablagerungen an den Innenflächen des Filtergehäuses bilden.

Die verformbare Ausbildung des Gehäusebodens 86 durch Verwendung von Elastomer-Material hat noch eine weitere vorteilhafte Wirkung: durch gezielte Verformbarkeit des Gehäuseboden 86 kann daran anbackendes Bodenmaterial vom Gehäuseboden 86 gelöst werden. Gleiches gilt für jede andere Wand des Filtergehäuses 54, die ebenfalls durch Verformbarkeit orthogonal zu ihrer Wandfläche von daran anbackendem Bodenmaterial befreit werden kann. Deshalb ist es von Vorteil, wenn weitere Wände des Filtergehäuses 54 aus Elastomer-Material oder durch dünnes Stahlblech mit verhältnismäßig geringem Biege- oder Walkwiderstand gebildet sind.

Die Verformung einer elastomeren Wand des Filtergehäuses 54 kann in einfacher Weise durch die Reinigungsvorrichtung 76, genauer durch die pneumatische Reinigungs-Teilvorrichtung 76a erfolgen. Wenn diese den Druck im Innenraum 57 des Filtergehäuses 54 erhöht, Beulen sich die verformbaren Wände des Filtergehäuses 54 nach außen, wodurch daran festbackende, gebundene mineralische Schichten von abgetragenem Bodenmaterial abplatzen und als Scherben im Innenraum 57 des Filtergehäuses 54 lose herumliegen können. Die abgeplatzten Scherben können dann durch die Auslassöffnung 92 an die Transportvorrichtung 26 abgegeben und von dieser zum Abwurf am Abgabeort 28 transportiert werden. Die Ventilanordnung 80 kann in einfacher Weise über daran angeschlossene Pneumatik-Leitungen den Druck im Innenraum 57 des Filtergehäuses 54, insbesondere im Kompartiment 54a, erhöhen.

Die Ventilanordnung 80 kann von Fahrstand 24 aus betätigbar sein. Die Steuervorrichtung 81 kann außerdem einen Reinigungsvorgang des Filtergehäuses 54 in vorbestimmten Zeitabständen durch entsprechende Ansteuerung der Ventilanordnung 80 auslösen.

So, wie die pneumatische Reinigungs-Teilvorrichtung 76a einen Überdruck im Filtergehäuse 54 erzeugen kann, kann das Fördergebläse 44 einen Unterdruck im Filtergehäuse 54 erzeugen, da das Filtergehäuse 54 auf der Saugseite des Fördergebläses 44 liegt. Durch geeignete Abstimmung des Betriebs der pneumatischen Reinigungs-Teilvorrichtung 76a und des Fördergebläses 44 aufeinander, etwa durch einen alternierenden Betrieb dieser Einrichtungen, kann das Filtergehäuse 54 und damit seine Wände einer wechselnden Überdruck-Unterdruck-Belastung ausgesetzt werden, was eine Walkbewegung von Wänden des Filtergehäuses 54 zur Ablösung von daran anbackendem ausgehärtetem Bodenmaterial weiter erleichtert.

Die Drucklufttanks 78 können, gegebenenfalls ebenfalls über die Ventilanordnung 80, an einen bordeigenen Kompressor angeschlossen sein, der für ein konstantes oder quasi-konstantes Druckluftniveau in den Drucklufttanks 78 sorgt.

## Patentansprüche

1. Selbstfahrende Bodenbearbeitungsmaschine (10), wie etwa Straßenfräse, Recycler oder Surface-Miner, umfassend
- einen von einer Mehrzahl von Ketten- oder/und Radlaufwerken (16, 18) höhenverstellbar getragenen Maschinenrahmen (20),
- eine Arbeitsvorrichtung (12) zur Material abtragenden Bearbeitung eines Bereichs eines Bodens (U), und
- eine Absaugeinrichtung (40), welche dazu ausgebildet ist, staubbelastete Luft an wenigstens einem Absaugort (46) aus wenigstens einem Maschinenbereich abzusaugen und abgesaugte Luft an einem vom Absaugort (46) verschiedenen Abblasort (50) auszublasen,
wobei die Absaugeinrichtung (40) eine längs eines Betriebsströmungswegs vom wenigstens einen Absaugort (46) zum Abblasort (50) angeordnete Filtervorrichtung (42) aufweist, wobei die Filtervorrichtung (42) umfasst:
- ein Filtergehäuse (54),
- einen im Filtergehäuse (54) aufgenommenen Filterkörper (52), wobei der Filterkörper (52) dazu ausgebildet ist, Staubpartikel aus der die Filtervorrichtung (42) durchströmenden Luft zu entfernen,
**dadurch gekennzeichnet, dass** die Filtervorrichtung (42) ein zwischen wenigstens zwei unterschiedlichen Betriebsstellungen verstellbares Bypass-Ventil (60) aufweist, wobei eine Filter-Betriebsstellung den wenigstens einen Absaugort (46) mit dem Abblasort (50) unter Durchströmung des Filterkörpers (52) verbindet, und wobei eine Bypass-Betriebsstellung den wenigstens einen Absaugort (46) mit dem Abblasort (50) unter Umgehung des Filterkörpers (52) verbindet.

2. Selbstfahrende Bodenbearbeitungsmaschine (10) nach Anspruch 1, **dadurch gekennzeichnet, dass** das Bypass-Ventil (60) in der Filter-Betriebsstellung den wenigstens einen Absaugort (46) derart mit dem Filtergehäuse (54) verbindet, dass ein den Filterkörper (52) aufnehmender Innenraum (57) des Filtergehäuses (54) Teil der den wenigstens einen Absaugort (46) mit dem Abblasort (50) verbindenden Strömungsleitung (56, 58) für staubbelastete Luft ist, und dass das Bypass-Ventil (60) in der Bypass-Betriebsstellung den wenigstens einen Absaugort (46) mit dem Abblasort (50) unter Umgehung des den Filterkörper (52) aufnehmenden Innenraums (57) des Filtergehäuses (54) verbindet.

3. Selbstfahrende Bodenbearbeitungsmaschine (10) nach Anspruch 1 oder 2, **dadurch gekennzeichnet, dass** das Bypass-Ventil (60) ein relativ zum Filtergehäuse (54) bewegliches Ventilbauteil (60a) und ein filtergehäusefestes Ventilbauteil (60b) umfasst, wobei das bewegliche Ventilbauteil (60a) relativ zum filtergehäusefesten Ventilbauteil (60b) um eine Ventilachse (V) relativ zum filtergehäusefesten Ventilbauteil (60b) translatorisch verschiebbar oder/und um einen vorbestimmten Winkel schwenkbar ist.

4. Selbstfahrende Bodenbearbeitungsmaschine (10) nach Anspruch 3, **dadurch gekennzeichnet, dass** mit dem beweglichen Ventilbauteil (60a) eine Austrittsmündung (62) eines bezüglich des Bypass-Ventils (60) stromaufwärtigen Förderkanals (58) verbunden ist.

5. Selbstfahrende Bodenbearbeitungsmaschine (10) nach Anspruch 3 oder 4, **dadurch gekennzeichnet, dass** das filtergehäusefeste Ventilbauteil (60b) zwei Eintrittsmündungen (64, 66) aufweist, von denen eine erste Eintrittsmündung (64) in ein erstes Kompartiment (54a) des Filtergehäuses (54) führt, in welchem wenigstens ein Filterkörper (52) aufgenommen ist.

6. Selbstfahrende Bodenbearbeitungsmaschine (10) nach Anspruch 5, **dadurch gekennzeichnet, dass** eine zweite Eintrittsmündung (66) in ein zweites Kompartiment (54b) des Filtergehäuses (54) führt, welches keine Filterwirkung bereitstellt.

7. Selbstfahrende Bodenbearbeitungsmaschine (10) nach einem der Ansprüche 5 oder 6,
**dadurch gekennzeichnet, dass** das bewegliche Ventilbauteil (60a) derart aufgebaut ist, dass es diejenige Eintrittsmündung (64, 66) verschließt, welche nicht mit der Austrittsmündung (62) des beweglichen Ventilbauteils (60a) verbunden ist.

8. Selbstfahrende Bodenbearbeitungsmaschine (10) nach einem der Ansprüche 3 bis 7,
**dadurch gekennzeichnet, dass** das bewegliche Ventilbauteil (60a) oder/und das filtergehäusefeste Ventilbauteil (60b) wenigstens an den aufeinander zuweisenden Seiten der Ventilbauteile (60a, 60b) mit einer ebenen Grenzfläche (60b1) ausgebildet ist bzw. sind.

9. Selbstfahrende Bodenbearbeitungsmaschine (10) nach einem der Ansprüche 4 bis 8, unter Einbeziehung des Anspruchs 4 oder 5,
**dadurch gekennzeichnet, dass** die Eintrittsmündungen (64, 66) oder die Austrittsmündung (62) mit zum jeweils anderen Ventilbauteil (60a, 60b) vorstehenden Dichtungsformationen (65a, 65b) versehen sind, um einen Trennspalt zwischen dem beweglichen Ventilbauteil (60a) und dem filtergehäusefesten Ventilbauteil (60b) zu überbrücken.

10. Selbstfahrende Bodenbearbeitungsmaschine (10) nach einem der Ansprüche 4 bis 9, unter Einbeziehung des Anspruchs 4,
**dadurch gekennzeichnet, dass** das bewegliche Ventilbauteil (60a) ein plattenförmiges, ebenes Bauteil umfasst, von welchem ausgehend wenigstens eine Anschlussformation (61) zum Anschluss des Luft leitenden Förderkanals (58) auf der stromaufwärtigen Seite des beweglichen Ventilbauteils (60a) absteht.

11. Selbstfahrende Bodenbearbeitungsmaschine (10) nach einem der Ansprüche 3 bis 10,
**dadurch gekennzeichnet, dass** das filtergehäusefeste Ventilbauteil (60b) ein plattenförmiges, ebenes Bauteil umfasst, von welchem ausgehend wenigstens eine Anschlussformation (63a, 63b) auf der stromabwärtigen Seite des filtergehäusefesten Ventilbauteils (60b) absteht.

12. Selbstfahrende Bodenbearbeitungsmaschine (10) nach einem der vorhergehenden Ansprüche,
**dadurch gekennzeichnet, dass** das Bypass-Ventil (60) einen Ventilantrieb aufweist, durch welchen auf Betätigung eines Steuerschalters am Fahrstand (24) der Bodenbearbeitungsmaschine das Bypass-Ventil (60) zwischen wenigstens zwei seiner Betriebsstellungen verstellbar ist.

## Claims

1. A self-propelled earth working machine (10), for example a road milling machine, recycler, or surface miner, encompassing:
- a machine frame (20) carried vertically adjustably by a plurality of crawler track units and/or wheel drive units (16, 18);
- a working apparatus (12) for material-removing working of a region of a substrate (U); and
- an extraction device (40) that is embodied to extract dust-laden air from at least one machine region at at least one extraction location (46), and to exhaust extracted air at a discharge location (50) different from the extraction location (46),
the extraction device (40) comprising a filter apparatus (42) arranged along an operational flow path from the at least one extraction location (46) to the discharge location (50), the filter apparatus (42) encompassing:
- a filter housing (54); and
- a filter element (52) received in the filter housing (54), the filter element (52) being embodied to remove dust particles from the air flowing through the filter apparatus (42),
**characterized in that** the filter apparatus (42) comprises a bypass valve (60) shiftable between two different operating positions, such that a filtering operating position connects the at least one extraction location (46) to the exhaust location (50) with passage through the filter element (52); and a bypass operating position connects the at least one extraction location (46) to the exhaust location (50) while bypassing the filter element (52).

2. The self-propelled earth working machine (10) according to Claim 1, **characterized in that** the bypass valve (60), in the filtering operating position, connects the at least one extraction location (46) to the filter housing (54) in such a way that an interior space (57) of the filter housing (54) which receives the filter element (52) is part of the flow duct (56, 58) for dust-laden air which connects the at least one extraction location (46) to the discharge location (50); and the bypass valve (60), in the bypass operating position, connects the at least one extraction location (46) to the discharge location (50) while bypassing the interior space (57) of the filter housing (54) which receives the filter element (52).

3. The self-propelled earth working machine (10) according to Claim 1 or 2, **characterized in that** the bypass valve (60) encompasses a valve component (60a) that is movable relative to the filter housing (54), and a filter-housing-mounted valve component (60b), the movable valve component (60a) being translationally displaceable relative to the filter-housing-mounted valve component (60b) and/or pivotable around a valve axis (V) through a predetermined angle relative to the filter-housing-mounted valve component (60b).

4. The self-propelled earth working machine (10) according to Claim 3, **characterized in that** an exit opening (62) of a conveying conduit (58) that is upstream with respect to the bypass valve (60) is connected to the movable valve component (60a).

5. The self-propelled earth working machine (10) according to Claim 3 or 4, **characterized in that** the filter-housing-mounted valve component (60b) comprises two entry openings (64, 66), of which a first entry opening (64) leads into a first compartment (54a) of the filter housing (54) in which at least one filter element (52) is received.

6. The self-propelled earth working machine (10) according to Claim 5, **characterized in that** a second entry opening (66) leads into a second compartment (54b) of the filter housing (54), which compartment does not perform any filtering action.

7. The self-propelled earth working machine (10) according to one of Claims 5 or 6,
**characterized in that** the movable valve component (60a) is constructed in such a way that it closes off that entry opening (64, 66) which is not connected to the exit opening (62) of the movable valve component (60a).

8. The self-propelled earth working machine (10) according to one of Claims 3 to 7,
**characterized in that** the movable valve component (60a) and/or the filter-housing-mounted valve component (60b) is/are embodied with a flat bounding surface (60b1) at least on the mutually facing sides of the valve components (60a, 60b).

9. The self-propelled earth working machine (10) according to one of Claims 4 to 8, including Claim 4 or 5,
**characterized in that** the entry openings (64, 66) or the exit opening (62) are equipped with sealing configurations (65a, 65b) projecting toward the respective other valve component (60a, 60b), in order to span a separating gap between the movable valve component (60a) and the filter-housing-mounted valve component (60b).

10. The self-propelled earth working machine (10) according to one of Claims 4 to 9, including Claim 4,
**characterized in that** the movable valve component (60a) encompasses a plate-shaped, flat component from which at least one attachment configuration (61) for attaching the air-carrying conveying conduit (58) protrudes on the upstream side of the movable valve component (60a).

11. The self-propelled earth working machine (10) according to one of Claims 3 to 10,
**characterized in that** the filter-housing-mounted valve component (60b) encompasses a plate-shaped, flat component from which at least one attachment configuration (63a, 63b) protrudes on the downstream side of the filter-housing-mounted valve component (60b).

12. The self-propelled earth working machine (10) according to one of the preceding claims,
**characterized in that** the bypass valve (60) encompasses a valve drive system with which, upon actuation of a control switch on the operator's platform (24) of the earth working machine, the bypass valve (60) is shiftable between at least two of its operating positions.

## Revendications

1. Machine de traitement du sol autotractée (10), telle qu'une fraiseuse routière, un recycleur ou un surface miner, comprenant
- un châssis de machine (20) supporté de manière réglable en hauteur par une pluralité de trains de roulement à chaînes ou/et à roues (16, 18),
- un dispositif de travail (12) pour le traitement par enlèvement de matière d'une zone d'un sol (U), et
- un dispositif d'aspiration (40), qui est conçu pour aspirer l'air chargé de poussière en au moins un lieu d'aspiration (46) hors d'au moins une zone de la machine et pour évacuer l'air aspiré en un lieu de soufflage (50) différent du lieu d'aspiration (46),
le dispositif d'aspiration (40) présentant un dispositif de filtre (42) disposé le long d'un trajet d'écoulement de fonctionnement depuis ledit au moins un lieu d'aspiration (46) jusqu'au lieu de soufflage (50), le dispositif de filtre (42) comprenant :
- un boîtier de filtre (54),
- un corps de filtre (52) logé dans le boîtier de filtre (54), le corps de filtre (52) étant conçu pour éliminer les particules de poussière de l'air traversant le dispositif de filtre (42),
**caractérisée en ce que** le dispositif de filtre (42) présente une soupape de dérivation (60) réglable entre au moins deux positions de fonctionnement différentes, une position de fonctionnement de filtre reliant ledit au moins un lieu d'aspiration (46) au lieu de soufflage (50) en traversant le corps de filtre (52), et une position de fonctionnement de dérivation reliant ledit au moins un lieu d'aspiration (46) au lieu de soufflage (50) en contournant le corps de filtre (52).

2. Machine de traitement du sol autotractée (10) selon la revendication 1, **caractérisée en ce que** la soupape de dérivation (60) relie, dans la position de fonctionnement du filtre, ledit au moins un lieu d'aspiration (46) au boîtier de filtre (54) de telle sorte qu'un espace intérieur (57) du boîtier de filtre (54), recevant le corps de filtre (52), fait partie de la conduite d'écoulement (56, 58) reliant ledit au moins un lieu d'aspiration (46) au lieu de soufflage (56, 58) pour l'air chargé de poussière, et **en ce que** la soupape de dérivation (60), dans la position de fonctionnement en dérivation, relie ledit au moins un lieu d'aspiration (46) au lieu de soufflage (50) en contournant l'espace intérieur (57) du boîtier de filtre (54) recevant le corps de filtre (52).

3. Machine de traitement du sol autotractée (10) selon la revendication 1 ou 2, **caractérisée en ce que** la soupape de dérivation (60) comprend un composant de soupape (60a) mobile par rapport au boîtier de filtre (54) et un composant de soupape fixe par rapport au boîtier de filtre (60b), le composant de soupape mobile (60a) pouvant être déplacé en translation par rapport au composant de soupape fixe par rapport au boîtier de filtre (60b) autour d'un axe de soupape (V) par rapport au composant de soupape fixe par rapport au boîtier de filtre (60b) ou/et pouvant pivoter selon un angle prédéterminé.

4. Machine de traitement du sol autotractée (10) selon la revendication 3, **caractérisée en ce qu'**une embouchure de sortie (62) d'un canal de transport (58) situé en amont par rapport à la soupape de dérivation (60) est reliée au composant de soupape mobile (60a).

5. Machine de traitement du sol autotractée (10) selon la revendication 3 ou 4, **caractérisée en ce que** le composant de soupape fixe par rapport au boîtier de filtre (60b) présente deux embouchures d'entrée (64, 66), dont une première embouchure d'entrée (64) mène dans un premier compartiment (54a) du boîtier de filtre (54), dans lequel est logé au moins un corps de filtre (52).

6. Machine de traitement du sol autotractée (10) selon la revendication 5, **caractérisée en ce qu'**une deuxième embouchure d'entrée (66) mène dans un deuxième compartiment (54b) du boîtier de filtre (54) qui ne fournit pas d'effet de filtre.

7. Machine de traitement du sol autotractée (10) selon l'une des revendications 5 ou 6, **caractérisée en ce que** le composant de soupape mobile (60a) est construit de manière à obturer l'embouchure d'entrée (64, 66) qui n'est pas relié à l'embouchure de sortie (62) du composant de soupape mobile (60a).

8. Machine de traitement du sol autotractée (10) selon l'une des revendications 3 à 7, **caractérisée en ce que** le composant de soupape mobile (60a) ou/et le composant de soupape fixe par rapport au boîtier de filtre (60b) est/sont réalisé(s) avec une surface limite plane (60b1) au moins sur les côtés des composants de soupape (60a, 60b) qui se font face.

9. Machine de traitement du sol autotractée (10) selon l'une des revendications 4 à 8, y compris la revendication 4 ou 5,
**caractérisée en ce que** les embouchures d'entrée (64, 66) ou l'embouchure de sortie (62) sont pourvues de formations d'étanchéité (65a, 65b) faisant saillie par rapport à l'autre composant de soupape (60a, 60b) respectif, afin de combler une fente de séparation entre le composant de soupape mobile (60a) et le composant de soupape fixe par rapport au boîtier de filtre (60b).

10. Machine de traitement du sol autotractée (10) selon l'une des revendications 4 à 9, en tenant compte de la revendication 4,
**caractérisée en ce que** le composant de soupape mobile (60a) comprend un élément plan en forme de plaque à partir duquel s'étend au moins une formation de raccordement (61) pour le raccordement du canal de transport conducteur d'air (58) sur le côté amont du composant de soupape mobile (60a).

11. Machine de traitement du sol autotractée (10) selon l'une des revendications 3 à 10,
**caractérisée en ce que** le composant de soupape fixe par rapport au boîtier de filtre (60b) comprend un élément plan en forme de plaque à partir duquel s'étend au moins une formation de raccordement (63a, 63b) sur le côté aval du composant de soupape fixe par rapport au boîtier de filtre (60b).

12. Machine de traitement du sol autotractée (10) selon l'une des revendications précédentes,
**caractérisée en ce que** la soupape de dérivation (60) présente un entraînement de soupape par lequel la soupape de dérivation (60) peut être déplacée entre au moins deux de ses positions de fonctionnement lors de l'actionnement d'un interrupteur de commande sur le poste de conduite (24) de la machine de traitement du sol.
